Europäisches Patentamt

European Patent Office

Office européen des brevets

(11) Numéro de publication: **0 327 777**

**A1**

## (12) DEMANDE DE BREVET EUROPEEN

(21) Numéro de dépôt: 88420041.1

(22) Date de dépôt: **12.02.88**

(51) Int. Cl.4: **G01D 5/245 , H03M 1/00**

(43) Date de publication de la demande:
**16.08.89 Bulletin 89/33**

(84) Etats contractants désignés:
**BE CH DE ES GB IT LI SE**

(71) Demandeur: **S.A. DES ETABLISSEMENTS STAUBLI (France)**
**B.P. 20 183 Rue des Usines**
**F-74210 Faverges(FR)**

(72) Inventeur: **Bourgeaux, Pierre**
**Lachat**
**F-74330 Poisy(FR)**
Inventeur: **Riaud, Alain**
**Lathuille Chef Lieu**
**F-74210 Faverges(FR)**

(74) Mandataire: **Monnier, Guy et al**
**Cabinet Monnier 142-150 Cours Lafayette**
**B.P. 3058**
**F-69393 Lyon Cédex 03(FR)**

(54) **Capteur de déplacement pour machines automatiques.**

(57) En vue de réduire l'encombrement d'un codeur du type différentiel, le disque (1) lié angulairement à l'organe mobile dont on désire connaître la position, et le disque (12) qui lui est relié à travers le pignon commun (7) et les deux roues dentées (6, 10), sont montés, avec ces dernières, co-axialement sur l'arbre principal (2) accouplé à l'arbre (4) qui commande les déplacements de l'organe mobile précité.

_Fig. 1_

EP 0 327 777 A1

La présente invention a trait aux codeurs de déplacements qui dans les robots, automates, centres d'usinage et autres machines automatiques, sont associés aux différents organes mobiles en vue d'assurer le repérage de la position exacte de chacun de ceux-ci dans la séquence de déplacements.

On sait qu'entre les codeurs absolus à lecture directe et les codeurs incrémentaux à décomptage relatif, on connaît des systèmes intermédiaires dans lesquels le relevé précis du positionnement est effectué moyennant une opération dite de "calibration" qui consiste à déplacer l'organe mobile considéré en vue de retrouver la position de celui-ci par comptage d'impulsions.

C'est ainsi qu'on a notamment proposé (on peut se repporter sur ce point aux brevets U.S.A. N° 4 363 026 SALMON et 4 041 484 GROFF, ainsi qu'au brevet ROYAUME-UNI N° 1 565 400 OTIS ELEVATOR GO.) des codeurs de déplacements comprenant un premier disque lié angulairement au déplacement de l'organe considéré, un second disque lié angulairement au premier suivant un rapport proche de 1 mais différent de cette valeur, et des moyens de comptage d'impulsions associés à chacun des disques en vue de déceler le décalage angulaire existant entre ceux-ci.

On obtient ainsi, à un coût bien inférieur à celui des codeurs absolus, des informations précises moyennant une opération préalable de calibration d'amplitude très réduite, non susceptible d'être gênée dans son déroulement par l'environnement de l'organe mobile à vérifier. Toutefois l'encombrement de ces codeurs qu'on peut qualifier de "différentiels" est très important et gêne leur implantation, en même temps que leur construction reste compliquée.

C'est à ces inconvénients qu'entend principalement remédier la présente invention, laquelle a pour objet un codeur de déplacement du type "différentiel" caractérisé en ce que le premier disque est calé sur un arbre principal solidaire de l'organe mobile considéré tandis que le second est monté fou sur ledit arbre, de façon à ce que les deux disques soient disposés coaxialement sur celui-ci en étant liés entre eux par l'intermédiaire de deux roues dentées qui sont elles-mêmes disposées coaxialement sur l'arbre principal et qui coopèrent avec un pignon commun porté par un arbre secondaire orienté parallèlement audit arbre principal.

Le dessin annexé, donné à titre d'exemple, permettra de mieux comprendre l'invention :

Fig. 1 est une coupe axiale schématique illustrant l'agencement du codeur suivant l'invention.

Fig. 2 et 3 sont des vues en élévation montrant chacun des deux disques tournants de l'appareil suivant fig. 1.

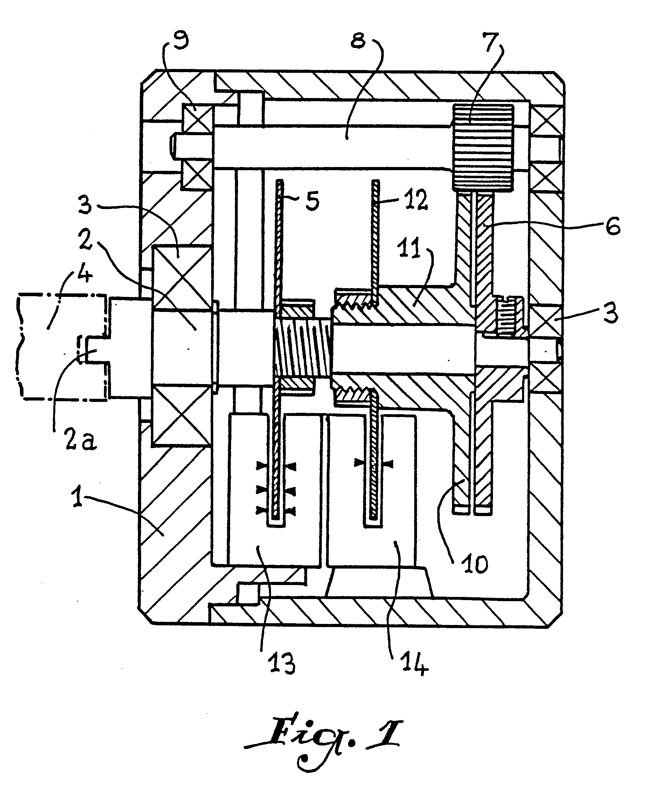

En fig. 1, la référence 1 désigne un boîtier à l'intérieur duquel tourne axialement un arbre principal 2, supporté dans deux roulements 3 opposés. L'une des extrémités de cet arbre 2 dépasse à l'extérieur du boîtier 1 et est conformée en 2a de façon à permettre son accouplement avec l'arbre 4 qui assure la commande du déplacement angulaire ou linéaire de l'organe mobile de la machine dont on désire être en mesure de repérer à tout moment la position.

Sur l'arbre principal 2 sont calés d'une part un disque 5, d'autre part une roue dentée 6, laquelle engrène avec un pignon 7 solidaire d'un arbre secondaire 8 monté fou à l'intérieur de roulements 9 prévus dans le boîtier 1. Le pignon 7 engrène simultanément avec une seconde roue dentée 10 solidaire d'un moyeu 11 qui tourne librement sur l'arbre 2 en arrière du disque 5. Sur ce moyeu 11 est calé un second disque tournant, référencé 12.

Il convient d'observer que les roues 6 et 10 comportent des nombres de dents très légèrement différents (une différence d'une dent suffit) de façon à ce que par suite de cette liaison différentielle, les deux disques 5 et 12 soient rendus angulairement solidaires suivant un rapport proche de 1, mais différent de cette valeur.

Afin de mieux fixer les idées par un exemple précis qui ne comporte toutefois aucun caractère limitatif, on peut supposer que la roue dentée 6 liée à l'arbre 2 et au disque 5 présente 125 dents, alors que la roue dentée 10 liée au moyeu 11 et au disque 12 n'en comporte que 124, de telle sorte que lorsque le disque 5 aura fait 124 tours, le disque 12 en aura effectué 125.

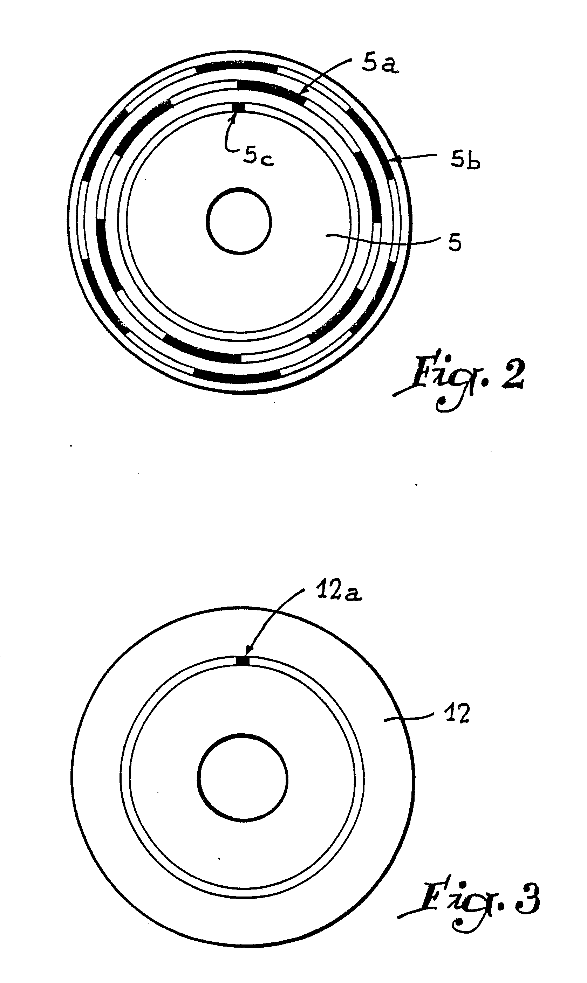

Comme montré en fig. 2, le disque 5 comporte trois échelles ou pistes concentriques respectivement référencées 5a, 5b et 5c. Les deux pistes 5a et 5b comportent le même nombre de repères, mais ceux-ci sont décalés angulairement d'une piste à l'autre ; la piste 5c peut comporter un nombre variable de repères, un seul dans l'exemple de réalisation considéré. A la manière illustrée en fig. 3, le disque 12 ne comporte qu'une seule piste 12a présentant un nombre de repères égal à celui de la piste 5c du disque 5, soit donc un dans le cas envisagé.

A chacun de ces disques 5 et 12 est associé un détecteur 13, respectivement 14, comportant un nombre d'organes de détection évidemment égal à celui des pistes présentées par le disque qui lui correspond. La nature de ces organes de détection dépend de celle des repères qui constituent les pistes des disques 5 et 12 ; il peut s'agir de cellules photoélectriques, de capteurs magnétiques ou de tout autre appareillage propre à engendrer une impulsion incrémentale lors du passage de chaque repère de la piste correspondante au cours de la rotation des disques 5 et 12, laquelle impulsion est transmise à un appareil de comptage renfermé dans l'armoire de commande de la machine envisagée.

Le fonctionnement du codeur ci-dessus décrit est analogue à celui des appareils classiques du même type. On supposera que le codeur est fixé à l'arrière du moteur qui assure le déplacement linéaire du bras d'un robot ou automate. Les disques 5 et 12 ont été préalablement réglés de façon à ce qu'à la moitié de la course du bras envisagé, les repères des pistes 5c et 12a soient simultanément en coïncidence avec l'organe de détection correspondant de l'un et l'autre des deux détecteurs 13 et 14.

Au cours du fonctionnement de la machine, le bras considéré va bien entendu se déplacer de part et d'autre de cette position milieu en assurant l'entraînement en rotation des deux disques 5 et 12. Toutefois, par suite de la liaison différentielle opérée par les roues dentées 6 et 19 et le pignon commun 7, les repères des pistes 5c et 12a vont se décaler les uns par rapport aux autres, si bien qu'à un moment quelconque, pour déterminer la position du bra du robot, il suffit de déplacer ce bras sur une distance maximale correspondant à un tour et de lire le décalage angulaire entre les deux pistes ou repères 5c et 12a, cette lecture s'effectuant par comptage d'impulsions au niveau des pistes 5a et 5b du disque 5.

Le comptage de impulsions engendrées par les détecteurs 13 et 14 au passage des repères des pistes 5c et 12a des disques 5 et 12 n'implique aucun traitement analogique, de telle sorte qu'il est simple et fiable. De plus et surtout, l'appareil ne présente qu'un encombrement très réduit et est de ce fait susceptible d'être trè aisément implanté sur la machine au niveau de chacun de organes mobiles de celle-ci.

## Revendications

Codeur de déplacements pour la détermination du positionnement de l'un des organes mobiles d'une machine automatique, du genre comprenant en combinaison un premier disque (5) lié angulairement au déplacement de l'organe considéré (4), un second disque (12) lié angulairement au premier disque suivant un rapport proche de 1 mais différent de cette valeur, et des moyens de comptage d'impulsions (13-14) associés à chacun des disques en vue de déceler le décalage angulaire entre ceux-ci, caractérisé en ce que le premier disque (5) est calé sur un arbre principal (2) solidaire de l'organe considéré (4) tandis que le second (12) est monté fou sur ledit arbre, de façon à ce que les deux disques soient disposés coaxialement sur celui-ci en étant liés entre eux par l'intermédiaire de deux roues dentées (6, 10) qui sont elles-mêmes disposées coaxialement sur l'arbre principal (2) et qui coopèrent avec un pignon commun (7) porté par un arbre secondaire (8) orienté parallèlement audit arbre principal (2).

*Fig. 1*

*Fig. 2*

*Fig. 3*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | GB-A-1 565 400 (OTIS)<br>* Figure 1; page 2, lignes 94-110; page 4, ligne 95 - page 5, ligne 81 *<br>--- | 1 | G 01 D 5/245<br>H 03 M 1/00 |
| Y | US-A-4 358 753 (CASCINI)<br>* Résumé; figures *<br>--- | 1 | |
| Y | US-A-4 284 028 (SWANBURG)<br>* Résumé; figures *<br>----- | 1 | |

DOMAINES TECHNIQUES RECHERCHES (Int. Cl.4)

G 01 D
H 03 M

Le présent rapport a été établi pour toutes les revendications

| Lieu de la recherche | Date d'achèvement de la recherche | Examinateur |
|---|---|---|
| LA HAYE | 24-10-1988 | LLOYD P.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
............................................................................
& : membre de la même famille, document correspondant